# EUROPÄISCHE PATENTSCHRIFT

(11) **EP 2 944 418 B1**
(45) Veröffentlichungstag und Bekanntmachung des Hinweises auf die Patenterteilung: **13.03.2019**
(21) Anmeldenummer: 15001419.9
(22) Anmeldetag: 12.05.2015
(51) Int. Cl.: B23P 19/06, B21J 15/02, B23K 20/12, F16B 25/00, F16B 25/10, B23K 20/16, F16B 5/04, B23K 101/18

(54) **VORRICHTUNG ZUM VERBINDEN VON BAUTEILEN, INSBESONDERE MITTELS DIREKTVERSCHRAUBEN, SPEZIELL FLIESSLOCHSCHRAUBEN ODER MITTELS REIBSCHWEISSEN, SOWIE VERFAHREN ZUM VERBINDEN VON BAUTEILEN, INSBESONDERE MITTELS DIREKTVERSCHRAUBEN ODER REIBSCHWEISSEN**
DEVICE FOR JOINING COMPONENTS, IN PARTICULAR USING DIRECT SCREWING, ESPECIALLY FLOW HOLE SCREWING OR BY MEANS OF FRICTION WELDING, AND METHOD FOR CONNECTING COMPONENTS, IN PARTICULAR USING DIRECT SCREWING OR FRICTION WELDING
DISPOSITIF DE LIAISON DE COMPOSANTS, EN PARTICULIER PAR VISSAGE DIRECT, FLUO-PERÇAGE OU PAR SOUDAGE PAR FRICTION, ET PROCÉDÉ DE LIAISON DE COMPOSANTS EN PARTICULIER PAR VISSAGE DIRECT OU SOUDAGE PAR FRICTION

(30) Priorität: 13.05.2014 DE 102014208994; 20.11.2014 DE 102014223761
(43) Veröffentlichungstag der Anmeldung: 18.11.2015
(73) Patentinhaber: DEPRAG Schulz GmbH u. Co., 92224 Amberg (DE)
(72) Erfinder: Pfeiffer, Rolf, DE - 92224 Amberg (DE); Zinn, Gerd, DE - 92242 Hirschau (DE)
(74) Vertreter: FDST Patentanwälte

(56) Entgegenhaltungen:
- DE-A1- 10 348 427
- DE-A1-102004 034 498
- DE-A1-102010 025 387
- DE-U1-202012 012 292
- DE-U1-202013 000 092
- US-A1- 2007 101 787
- US-A1- 2007 228 104
- US-A1- 2007 267 462

## Beschreibung

Die Erfindung betrifft eine Vorrichtung sowie ein Verfahren zum Verbinden von Bauteilen, insbesondere mittels Direktverschrauben, speziell Fließlochschrauben, oder mittels Reibschweißen.

Ein Verfahren zum Fließlochschrauben ist beispielsweise zu entnehmen aus der DE 103 48 427 A1. Beim Fließlochschrauben werden zwei Bauteile mittels einer Verschraubung ohne Vorlochen mindestens eines Bauteils miteinander verschraubt. In einem ersten Prozessabschnitt wird hierbei in dem Bauteil spanlos ein Loch erzeugt und anschließend wird in einem zweiten Prozessabschnitt in das erzeugte Loch ein Gewinde eingeformt. Beide Prozessabschnitte erfolgen hierbei mit einer Fließlochschraube, mit der also zunächst das Loch spanlos erzeugt wird und anschließend das Gewinde eingeformt wird. Schließlich dient die Fließlochschraube zugleich auch dazu, die beiden Bauteile über eine Schraubverbindung in einem dritten Prozessabschnitt miteinander zu verbinden. Für den Fließlochschraubvorgang wird dabei die Fließlochschraube in eine Drehbewegung versetzt und mit Hilfe eines Vorschubantriebs in Axialrichtung mit vorgegebener Vorschubkraft versetzt.

Die Fließlochschraube weist üblicherweise eine konische Spitze auf. Beim Lochformvorgang im ersten Prozessabschnitt wird durch eine hohe Drehzahl sowie eine hohe Vorschubkraft das Bauteil durch die Fließlochschraube an der vorgesehenen Lochposition zunächst erwärmt und anschließend plastisch verformt. Nach dem Lochformvorgang dringt die Fließlochschraube weiter ein und formt mit ihrem Schraubengewinde das Gewinde in das zuvor geformte Loch ein. Für den Gewindeformvorgang im zweiten Prozessabschnitt wird üblicherweise die Drehzahl der Fließlochschraube verringert. Im ersten Prozessabschnitt, bei dem durch die Erwärmung eine plastische Verformung der Bauteile erfolgt, werden gemäß der DE 103 48 427 A1 Drehzahlen im Bereich von 1000 bis 5000U/min und Vorschub- bzw. Andruckkräfte im Bereich zwischen 0,3 bis 1,5kN realisiert.

Bei der DE 103 48 427 A1 ist darüber hinaus vorgesehen, dass die Bauteile während des Verschraubens durch eine Niederhaltekraft aneinander gedrückt werden, welche beispielsweise pneumatisch oder auch durch Federn aufgebracht wird. Zusätzlich wirkt mittels einer Schraubspindel eine Vorschubkraft auf die Fließlochschraube.

Aus der DE 199 11 308 A1 ist eine weitere Vorrichtung zum Fließlochfurchen beschrieben. Hierbei wird ein einziges Werkzeug eingesetzt, welches für die Lochoperation auf einen langsameren Vorschub gesteuert ist im Vergleich zum anschließenden Gewindeformen. Mittels einer wendelförmigen Druckfeder wird hierbei ein Anpressdruck erzeugt.

Neben dem Fließlochschrauben ist als weitere Direktverschraubung noch ein Bohrschrauben bekannt, bei dem das Loch im ersten Prozessabschnitt mit Hilfe einer Bohrschraube durch Bohren, also spanend erzeugt wird und anschließend im zweiten Prozessabschnitt - wie beim Fließlochschrauben auch - ein Gewinde eingeformt wird. Unter Direktverschraubung wird allgemein ein Prozess verstanden, bei dem der Lochformvorgang und der Schraubvorgang in einem gemeinsamen Schraubvorgang mit einem Schraubelement erfolgt, welches auch zur Erzeugung des Durchzugs im Bauteil mit Einformung des Gewindes ausgebildet ist.

Das Direktverschrauben, insbesondere das Fließlochschrauben findet zusehends Verwendung auch in der Kraftfahrzeugindustrie. Hierbei ist insbesondere eine hohe Taktrate bei gleichzeitig hoher Prozesssicherheit gefordert.

Auf dem Markt befindliche Systeme zeichnen sich durch pneumatische Systeme aus, mittels derer die Vorschubkraft pneumatisch erzeugt und auf die Antriebswelle übertragen wird. Insbesondere beim Einsatz in der Kraftfahrzeugindustrie werden die entsprechenden Vorrichtungen zum Fließlochschrauben an einer Roboterhand eines Handhabungsroboters, insbesondere eines mehrachsigen Industrieroboters befestigt. Bei der Bewegung der Roboterhand während eines Arbeitszyklusses treten zum einen hohe Beschleunigungswerte auf. Zum anderen ist es häufig erforderlich, dass die Vorrichtung in beengte Bauräume beispielsweise bei einer Kraftfahrzeug-Karosserie geführt werden muss. Die auf dem Markt befindlichen Systeme bauen vergleichsweise voluminös. Üblicherweise ist zur Erzeugung der Drehbewegung ein Drehantrieb vorgesehen und parallel hierzu zur Erzeugung der teilweise sehr hohen Vorschubkräfte ein pneumatischer Vorschubantrieb. Dieser ist parallel neben dem Drehantrieb angeordnet und über eine deshalb notwendige massive Führungs- und Tragstruktur werden die Vorschubkräfte auf eine Antriebswelle des Drehantriebs übertragen. Insgesamt benötigen daher derartige Systeme ein gewisses Bauvolumen und weisen aufgrund der massiven Tragstruktur auch ein hohes Gewicht auf.
Neben dem Direktverschrauben zweier Bauteile ist auch das Reibschweißen bekannt, beispielsweise aus der DE 10 2004 034 498 A1. Beim darin beschriebenen Reibschweißen wird ein als Verbindungselement ausgebildetes Bauteil gegen ein stationäres Bauteil gepresst und dabei rotiert. Durch die erzeugte Reibung erwärmen sich während einer Erwärmungsphase die Bauteile bis das stationäre Bauteil plastisch wird. Dies äußert sich in einem von einer Steuerung erfassbaren Drehmomentabfall. Die Drehzahl wird verringert und bis zum Stillstand reduziert. Gleichzeitig kann die Presskraft erhöht werden, und es wird die Reibschweißverbindung ausgebildet.

Eine weitere Vorrichtung und ein weiteres Verfahren zum Verbinden von Bauteilen mittels Reibschweißen ist aus der US 2007/228104 A1 bekannt.

Ausgehend hiervon liegt der Erfindung die Aufgabe zugrunde, eine kompaktbauende Vorrichtung für ein Verbinden von Bauteilen insbesondere mittels Direktverschrauben oder Reibschweißen anzugeben, welche insbesondere an einer Roboterhand eines Handhabungsroboters in kompakter Weise bei zugleich zuverlässiger Kraftübertragung befestigbar ist. Der Erfindung liegt weiterhin die Aufgabe zugrunde, ein Verfahren zum Verbinden von Bauteilen insbesondere mittels Direktverschrauben oder mittels Reibschweißen mit einer kompakten Vorrichtung zu ermöglichen.

Die Aufgabe wird erfindungsgemäß gelöst durch eine Vorrichtung mit den Merkmalen des Anspruchs 1. Die Vorrichtung umfasst ein sich in einer Axialrichtung erstreckendes Führungselement, welches insbesondere als ein Führungsrohr mit typischerweise zylindrischem Innenhohlraum ausgebildet ist. Die Außenkontur des Führungsrohrs kann von einer Kreisform abweichen. Innerhalb dieses Führungselements ist eine Antriebswelle angeordnet, die im Betrieb von einem Drehantrieb angetrieben wird, welcher einen Drehmotor aufweist. Die Antriebswelle ist dabei in Axialrichtung versetzbar innerhalb des Führungselements angeordnet. Weiterhin umfasst die Vorrichtung einen gesteuerten Vorschubantrieb zur Erzeugung einer Vorschubbewegung, wobei der Vorschubantrieb vorzugsweise einen nicht pneumatischen Vorschubmotor umfasst. Der Vorschubantrieb weist zur Übertragung der Vorschubbewegung sowie einer Vorschubkraft von zumindest 500N, insbesondere von zumindest 1000N eine Vorschubeinheit auf. Eine Komponente der Vorschubeinheit ist dabei zur Übertragung der Vorschubbewegung sowie der Vorschubkraft auf die Antriebswelle in Axialrichtung versetzbar.

Die Vorrichtung umfasst weiterhin eine Steuereinheit zum Ansteuern des Vorschubantriebs, wobei die Steuereinheit derart ausgebildet ist, dass im Betrieb in Abhängigkeit eines Prozessparameters die Vorschubkraft umgeschaltet wird. Bei einem Fließlochbohrvorgang wird von einer hohen Vorschubkraft auf eine reduzierte Vorschubkraft umgeschaltet. Bei einem Reibschweißvorgang wird üblicherweise nach einem Erweichen des Materials auf eine höhere Vorschubkraft umgeschaltet.

Die Vorrichtung ist dabei weiterhin derart ausgebildet, dass die Vorschubeinheit koaxial zur Antriebswelle innerhalb der Führungseinheit angeordnet ist und auf die Antriebswelle in Axialrichtung zur zentrischen Übertragung der Vorschubkraft einwirkt. Die Kraftübertragung erfolgt daher querkraftfrei, es treten also keine Biegemomente auf, die über eine massive Tragstruktur abgefangen werden müssten.

Diese Vorrichtung ist daher speziell für das Direktverschrauben, insbesondere Fließlochschrauben, konzipiert. In gleicher Weise eignet sich die Vorrichtung auch für das Reibschweißen. Die Vorrichtung umfasst zwei separate Antriebe, nämlich den Vorschubantrieb und den Drehantrieb. Von besonderer Bedeutung ist die koaxiale, konzentrische Anordnung der Vorschubeinheit zur Antriebswelle, so dass also die hohen Vorschubkräfte zentrisch unmittelbar auf die Antriebswelle übertragen werden, so dass also kein Umlenken der Vorschubkraft erforderlich und vorgesehen ist, so dass auf eine starke mechanische Tragstruktur verzichtet ist.
Am vorderen Ende der Antriebswelle wird im Betrieb ein jeweiliges Verbindungselement gehalten. Dies ist bei einem Direktverschraubvorgang ein Schraubelement, insbesondere eine Fließlochschraube, und beim Reibschweißen ein geeignetes Reibschweißbauteil, wie es beispielsweise in der DE 10 2010 017 550 A1 beschrieben ist und welches allgemein nach Art eines Drehbolzens ausgebildet ist. Stirnendseitig ist daher an der Antriebswelle ein entsprechender Werkzeugangriff bzw. eine entsprechende Halterung für ein derartiges Verbindungselement angeordnet. Mit diesem Konzept der koaxialen Anordnung der Vorschubeinheit zur Antriebswelle zur zentrischen Übertragung der Vorschubkraft ist daher insgesamt eine sehr kompakt bauende und auch vergleichsweise leichte Vorrichtung ermöglicht, die dennoch zur Übertragung der hohen Kräfte und gleichzeitig hohen Drehzahlen ausgebildet ist.
Bei einer Anwendung für das Fließlochschrauben ist die Vorrichtung zur Übertragung von Kräften von typischerweise bis zu 5000N und für hohe Drehzahlen für die Antriebswelle von typischerweise bis 8000U/min ausgebildet. Bei einer Anwendung für das Reibschweißen ist die Vorrichtung zur Übertragung von Kräften von typischerweise bis zu 10000N und für hohe Drehzahlen für die Antriebswelle von typischerweise bis 20000U/min ausgebildet. Die Vorrichtung eignet sich daher insbesondere für den vorgesehenen Anwendungszweck in der Kraftfahrzeugindustrie, speziell zur Anordnung der Vorrichtung bei einem Industrieroboter. Die Vorrichtung ist im Einsatz bevorzugt an einer Roboterhand befestigt.

Erfindungsgemäß umfasst die Vorschubeinheit einen Spindelantrieb mit zwei Spindelelementen, nämlich mit einer Spindelmutter und mit einer Gewindespindel. Die Vorschubkraft und die Vorschubbewegung werden daher über den Spindelantrieb effektiv und in kompakter Bauweise übertragen.

Aufgrund der koaxialen Anordnung eignet sich die Ausgestaltung als Spindelantrieb besonders, da hierdurch die koaxiale Anordnung zur Antriebswelle besonders einfach ist. Bei dem Spindelantrieb handelt es sich beispielsweise um einen Rollen- oder Kugelgewindeantrieb.
Alternativ zur Ausbildung als Spindelantrieb ist beispielsweise ein Linearantrieb oder auch ein Hydraulikantrieb eingesetzt.

Erfindungsgemäß sind die Drehbewegungen des Vorschubantriebs einerseits, insbesondere des Spindelantriebs, und der Antriebswelle andererseits voneinander entkoppelt. Die Drehbewegung des Vorschubantriebs, insbesondere die des Spindelantriebs oder allgemein eines Vorschubmotors, hat also keinerlei Einfluss auf die Antriebswelle und wird insbesondere nicht auf diese übertragen. Es wird lediglich die axiale Vorschubbewegung und Vorschubkraft auf die Antriebswelle übertragen. Im Hinblick auf die Drehbewegung handelt es sich um zwei vollständig entkoppelte Antriebe. Durch diese Maßnahme wird eine einfache getrennte Ansteuerung der beiden Antriebe, nämlich des Vorschubantriebs sowie des Drehantriebs ermöglicht. Beim Direktverschrauben ist nämlich ein schnelles Umschalten zwischen den beiden Prozessabschnitten (Lochformen und Gewindeformen) erforderlich. Auch beim Reibschweißen ist ein zügiges Umschalten zwischen zwei Prozessschritten (Erwärmen und Verbinden) notwendig. Bei miteinander gekoppelter Drehbewegung wäre andernfalls eine schnelle, synchrone Umschaltung der beiden Antriebe erforderlich, was nur mit Aufwand realisierbar ist.
Beim Spindelantrieb besteht grundsätzlich die Möglichkeit, dass wahlweise die Spindelmutter oder die Gewindespindel ortsfest positioniert ist und das jeweils andere Spindelelement in Axialrichtung versetzt wird, um die Vorschubbewegung auf die Antriebswelle zu übertragen.
In zweckdienlicher Ausgestaltung ist die Gewindespindel in Axialrichtung ortsfest positioniert und die Spindelmutter ist in Axialrichtung verstellbar angeordnet.

In bevorzugter Weiterbildung überlappen das feststehende Spindelelement, also insbesondere die Gewindespindel, und die Antriebswelle in Axialrichtung und sind insbesondere koaxial ineinander angeordnet. Die eine dieser beiden Komponenten ist daher als Hohlkörper und insbesondere hülsenartig ausgebildet. Dies ist insbesondere die Antriebswelle. Hierdurch wird eine kompakte Bauform erreicht.

Das eine Spindelelement, also insbesondere die Gewindespindel, und die Antriebswelle, sind dabei über eine axiale Führungslänge ineinander angeordnet, die vorzugsweise zumindest einem maximalen Arbeitshub entspricht. Durch diese Anordnung der beiden Einheiten, die zugleich zur Übertragung der Vorschubkräfte miteinander zusammenwirken, ist eine sehr kompakte Ausbildung der gesamten Vorrichtung mit kurzer Baulänge erzielt.

Der maximale Arbeitshub und damit etwa auch die axiale Führungslänge liegen vorzugsweise in einem Bereich von 100 bis 150 mm.

Als Vorschubmotor für den Vorschubantrieb wird bevorzugt ein nicht pneumatischer Motor, insbesondere ein erster Elektromotor, eingesetzt. Daneben besteht grundsätzlich auch die Möglichkeit, beispielsweise einen Hydraulikmotor einzusetzen. Ein derartiger Vorschubantrieb, insbesondere ein Elektromotor mit Spindelantrieb, weist eine im Vergleich zu einem Pneumatikzylinder deutlich verringerte Baugröße auf. Der Elektromotor ist insbesondere ein bürstenloser (Gleichstrom-)Elektromotor. Mit einem derartigen ersten Elektromotor ist zum einen die erforderliche Vorschubkraft in einfacher Weise aufbringbar.

Zum anderen ist ein derartiger erster Elektromotor besonders einfach und definiert zu steuern. Insbesondere ist damit - im Vergleich zu einem pneumatischen Motor - ein definiertes schnelles Umschalten zu einem vorgegebenen Umschaltzeitpunkt zwischen dem ersten und zweiten Prozessabschnitt in einfacher Weise umzusetzen. Insbesondere beim Fließlochschrauben besteht nämlich das Problem, dass zwischen dem ersten Prozessschritt, bei dem das Loch geformt wird, und dem anschließenden zweiten Prozessschritt, bei dem ein Gewinde geformt wird, möglichst schnell auf die geringe Vorschubkraft und die geringe Vorschubgeschwindigkeit umgeschaltet werden muss. Andernfalls besteht das Problem, dass das Gewinde des Schraubelements, insbesondere der Fließlochschraube, mit hoher Geschwindigkeit und hoher Kraft gegen das Bauteil verfährt und beschädigt wird.
In bevorzugter Ausgestaltung ist daher auch vorgesehen, dass ein Umschalten zwischen zwei Prozessschritten in Abhängigkeit eines zur Vorschubkraft korrelierten Parameters erfolgt. Beim Direktverschrauben erfolgt das Umschalten also von einer hohen Vorschubkraft des Vorschubantriebs und einer hohen Drehgeschwindigkeit des Drehantriebs auf eine geringe Vorschubkraft und eine geringe Drehgeschwindigkeit Beim Reibschweißen erfolgt ein Umschalten auf eine höhere Vorschubkraft und auf eine niedrigere Drehgeschwindigkeit, insbesondere wird die Drehbewegung gestoppt. Grundsätzlich kann der Parameter, in dessen Abhängigkeit die Umschaltung erfolgt, die Vorschubkraft selbst sein, die beispielsweise mit einer Kraftmessdose gemessen wird. Vorzugsweise handelt es sich jedoch um einen Antriebsparameter des Vorschubantriebs, welcher mittelbar die Vorschubkraft definiert. Bei der Verwendung eines Elektromotors wird insbesondere dessen Motorstrom, also der aufgenommene Strom, ausgewertet. Die Ausgestaltung der Auswertung eines zur Vorschubkraft zumindest korrelierten Parameters beruht dabei auf der Überlegung, dass nach dem Lochbildungsprozess beim Fließlochbohren bzw. nach der Materialerwärmung beim Reibschweißen die Vorschubkraft und damit der mit ihr korrelierte Antriebsparameter charakteristisch abfällt. Als Umschaltkriterium wird hierbei wahlweise ein charakteristischer Schwellwert oder auch ein charakteristischer Abfall des Parameters ausgewertet. Das Verfahren zum Steuern des Direktverschraubungsprozesses, insbesondere dieses Umschaltens, erfolgt dabei vorzugsweise gemäß dem Verfahren, wie es in der zeitgleich eingereichten DE 10 2014 208 989.1 beschrieben ist. Beim Reibschweißen erfolgt der Prozessablauf beispielsweise wie er in der eingangs genannten DE 10 2004 034 498 A1 beschrieben ist.

Für die Übertragung der Drehbewegung des Drehantriebs auf die Antriebswelle ist letztere vorzugsweise nach Art einer Keilwelle insbesondere mit Außenverzahnung ausgebildet, welche über ein in Axialrichtung feststehendes Abtriebsrad zur Übertragung der Drehbewegung und auch eines Drehmoments antreibbar ist. Grundsätzlich sind die Antriebswelle und das Abtriebsrad, also allgemein ein Antriebselement zur Erzeugung der Drehbewegung, relativ zueinander in Axialrichtung versetzbar angeordnet, um über den gesamten Arbeitshub hinweg die Drehbewegung auf die Antriebswelle bei gleichzeitig in Axialrichtung festsitzendem Drehmotor zu übertragen. Alternativ zu der zuvor beschriebenen bevorzugten Variante besteht auch die Möglichkeit, die Antriebswelle als Keilnabe auszubilden und ein Abtriebselement des Drehmotors als Keilwelle auszugestalten.

Zweckdienlicherweise ist dabei das Abtriebsrad in Axialrichtung an einem vorderen Ende des Führungselements angeordnet. Das Abtriebsrad ist dabei vorzugsweise seitlich am Führungselement angeordnet und greift durch eine entsprechende Aussparung innerhalb des insbesondere rohrförmigen Führungselements an der innenliegenden Antriebswelle an. Durch die Anordnung am vorderen Ende des Führungselementes wird der besondere Vorteil erzielt, dass die Drehmomentübertragung im Endbereich erfolgt, wodurch eine Torsion der Antriebswelle auf ein Minimum reduziert ist. Alternativ besteht grundsätzlich auch die Möglichkeit, die Antriebswelle durch das gesamte Führungselement hindurchzuführen, beispielsweise auch durch eine Spindelmutter hindurch, über die die Antriebswelle in Axialrichtung versetzt wird, und die Antriebswelle am rückseitigen Ende mit Hilfe des Drehantriebs anzutreiben.

In zweckdienlicher Weiterbildung weist auch der Drehantrieb einen Elektromotor, nämlich einen zweiten Elektromotor, auf. Dieser ist ebenfalls vorzugsweise als bürstenloser (Gleichstrom-)Elektromotor ausgebildet.

Bei diesem zweiten Elektromotor handelt es sich um einen geregelten Elektromotor, über den der eigentliche Schraubvorgang gesteuert wird. Hierzu ist beispielsweise eine Drehmomentsteuerung oder auch eine sonstige Steuerung vorgesehen, um das Schraubelement mit einem definierten Drehmoment anzuziehen. Neben einer Drehmomentsteuerung können auch andere Abbruchkriterien zur Beendigung des Einschraubvorgangs, beispielsweise eine Drehwinkelsteuerung etc., vorgesehen sein.

Im Hinblick auf eine möglichst kompakt bauende Ausgestaltung weist das Führungselement eine axiale Länge im Bereich von lediglich 250 bis 350 mm auf. Hierbei ist eine eventuelle Integration eines Motors in koaxialer Anordnung innerhalb des Führungselements unberücksichtigt. Bei einer derartigen koaxialen Anordnung eines Motors, beispielsweise des ersten Elektromotors für den Vorschubantrieb, verlängert sich das Führungselement um die Länge dieses Motors, beispielsweise um etwa 100 bis 150 mm. Grundsätzlich besteht die Möglichkeit, diesen Vorschubmotor koaxial zur Antriebswelle anzuordnen oder auch neben dem Führungselement seitlich zur Antriebswelle. Im letztgenannten Fall würde der Spindelantrieb über ein radial angeordnetes Abtriebsrad - ähnlich wie zuvor beim Drehantrieb beschrieben - mit dem Vorschubmotor in Verbindung stehen.

Im Hinblick auf eine möglichst kompakt bauende Ausgestaltung in radialer Richtung, um also auch bei beengten Bauräumen möglichst keine Störkontur zu bilden, weist die Vorrichtung senkrecht zu einer Drehachse zu einer Seite hin eine radiale Ausdehnung von maximal 35mm und vorzugsweise von maximal 30 mm auf. Dies gilt insbesondere bei einer koaxialen Anordnung des Vorschubmotors. Dieser ist bei der Ausgestaltung als Elektromotor sehr kompakt bauend und weist einen Durchmesser von beispielsweise lediglich 40mm auf. Gleichzeitig können und sind an dem Führungselement vorzugsweise weitere Komponenten, insbesondere der bereits erwähnte Drehantrieb, seitlich angeordnet. Dies ist unkritisch, da in den beengten Bauräumen häufig ein minimaler Abstand nur zu einer Seite hin gefordert wird, wohingegen zur anderen Seite hin ein größerer Bauraum zur Verfügung steht. Insgesamt ist daher durch den hier beschriebenen Aufbau eine Vorrichtung zum Direktverschrauben oder zum Reibschweißen geschaffen, welche nur eine geringe radiale Störkontur definiert und insgesamt sehr kompakt und auch vergleichsweise leicht baut.

Zum Fließlochschrauben ist die Steuereinheit insgesamt derart ausgebildet, dass in Abhängigkeit des Prozessparameters, insbesondere des Motorstroms, von einer hohen Vorschubkraft im Bereich von größer 1000N auf eine reduzierte Vorschubkraft im Bereich von etwa bis 500N und gleichzeitig von einer hohen Drehgeschwindigkeit der Antriebswelle im Bereich von 5000 bis 8000U/min auf eine geringe Drehgeschwindigkeit im Bereich von 500 bis 2500U/min umgeschaltet wird.

Im Falle eines Reibschweißvorgangs ist die Steuereinheit insgesamt derart ausgebildet, dass in Abhängigkeit des Prozessparameters, insbesondere des Motorstroms, von einer hohen Vorschubkraft im Bereich von größer 2000N, insbesondere von größer 5000N auf eine maximale Vorschubkraft umgeschaltet wird, die beispielsweise 1000 - 2000N größer ist und insbesondere bei etwa 10000N liegt. Gleichzeitig wird von einer hohen Drehgeschwindigkeit der Antriebswelle im Bereich von 5000, vorzugsweise von über 10000 bis 20000U/min auf eine geringe Drehgeschwindigkeit bis hin zum Stillstand umgeschaltet.

Bei Erreichen des definierten Umschaltpunktes, also des charakteristischen Abfalls des Motorstroms bzw. beim Unterschreiten eines charakteristischen Umschaltwerts des Motorstroms wird dies von einer Auswerteeinheit erfasst, die beispielsweise im Vorschubantrieb integriert ist und ein Teil der Steuereinheit bildet. Anschließend geht ein entsprechendes Steuersignal an den Drehantrieb, welcher dann auf die geringere Drehgeschwindigkeit umschaltet.

Die Aufgabe wird weiterhin erfindungsgemäß gelöst durch ein Verfahren zum Verbinden zweier Bauteile insbesondere mittels Direktverschrauben, speziell Fließlochschrauben, oder mittels Reibschweißen mit Hilfe der hier beschriebenen Vorrichtung. Die im Hinblick auf die Vorrichtung angeführten Vorteile und bevorzugten Ausgestaltungen sind sinngemäß auch auf das Verfahren zu übertragen.

Ein Ausführungsbeispiel der Erfindung wird nachfolgend anhand der Figuren näher erläutert. Diese zeigen:
- Fig. 1: in einer schematischen und stark vereinfachten Darstellung eine Vorrichtung zum Fließlochschrauben
- Fig. 2: eine Schnittansicht einer Vorrichtung zum Fließlochschrauben sowie
- Fig. 3: eine Draufsicht auf eine Vorrichtung gemäß einer alternativen Variante.

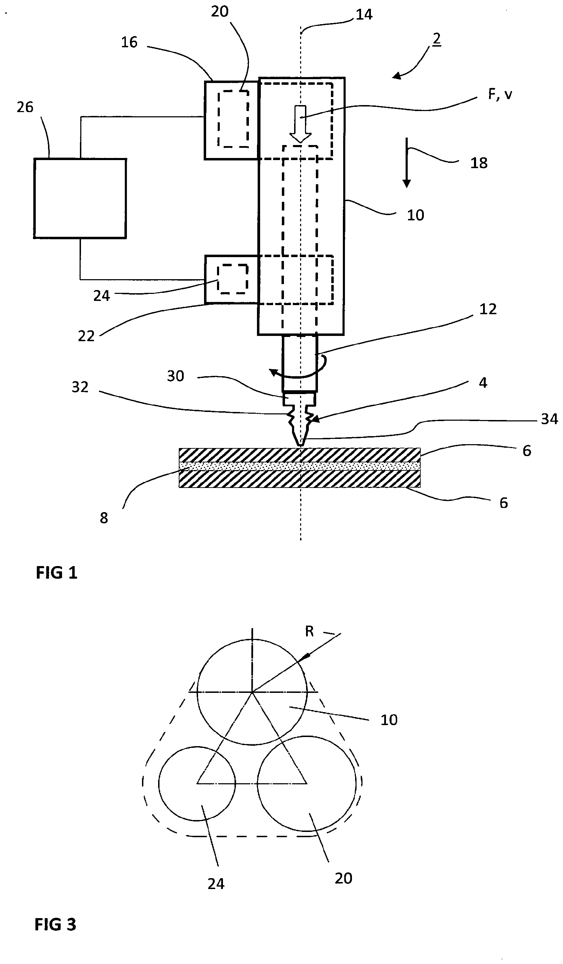

Die in Fig. 1 dargestellte Vorrichtung 2 dient zur Durchführung eines Fließlochschraubvorgangs. Bei diesem wird eine sogenannte Fließlochschraube 4 in zumindest ein Bauteil 6 eingefügt. Im Ausführungsbeispiel sind zwei miteinander über die Fließlochschraube 4 zu verbindende Bauteile 6 dargestellt, welche ergänzend über eine Klebschicht 8 miteinander verbunden sind.

Die Vorrichtung eignet sich grundsätzlich auch für einen Reibschweißvorgang, bei dem ein Verbindungselement als das zumindest eine Bauteil mit einem ortsfesten Bauteil verbunden wird. Bei diesem Reibschweiß-Verbindungselement handelt es sich üblicherweise um einen Verbindungsbolzen mit einem Kopf- und einen Schaftbereich. Das Verbindungselement wird von der Vorrichtung am Kopf gehalten und beim Prozess gegen das weitere Bauteil gepresst sowie gleichzeitig mit hoher Geschwindigkeit gedreht, bis aufgrund der Reibungswärme das Material erweicht. Anschließend wird das Verbindungselement in das erweichte Material eingepresst und hierbei mit dem Bauteil verschweißt. Die Drehung ist dabei auf Null reduziert.

Nachfolgend wird die Vorrichtung am Anwendungsbeispiel des Fließlochschraubens näher erläutert.

Die Vorrichtung 2 umfasst ein Führungselement 10, das bevorzugt als ein Führungsrohr ausgebildet ist. Innerhalb des Führungselements 10 ist eine als Schrauberwelle ausgebildete Antriebswelle 12 um eine Drehachse 14 drehbar gelagert. Die Vorrichtung 2 umfasst weiterhin einen Vorschubantrieb 16 zur Erzeugung einer Vorschubbewegung in Axialrichtung 18 sowie zur Erzeugung einer Vorschubkraft F. Die Vorschubkraft F sowie die Vorschubbewegung werden dabei auf die Antriebswelle 12 übertragen. Über den Vorschubantrieb 16 wird eine Vorschubgeschwindigkeit v auf die Antriebswelle 12 übertragen, mit der diese also in Axialrichtung 18 versetzt wird.

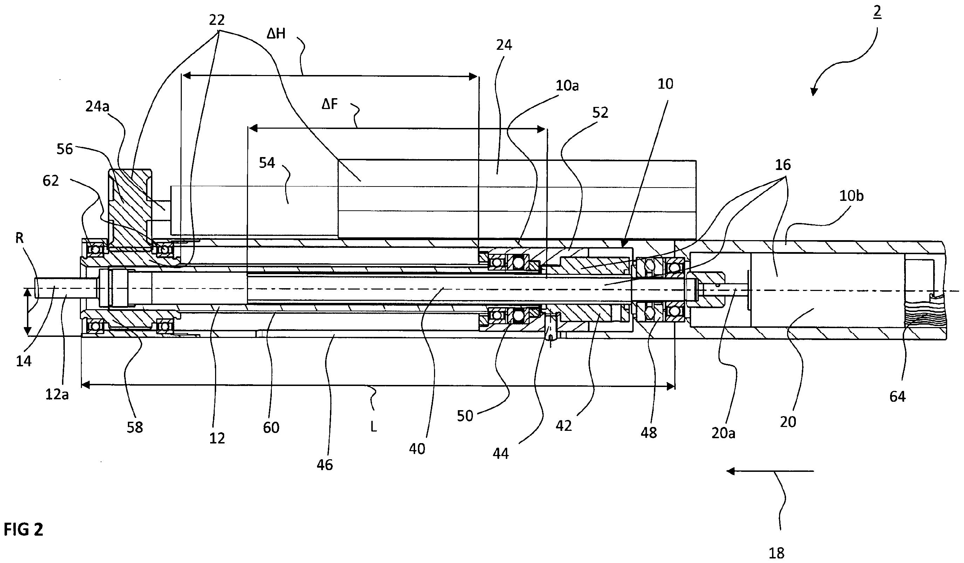

Der Vorschubantrieb 16 weist einen ersten Elektromotor 20 auf, mit Hilfe dessen die Vorschubkraft F sowie die Vorschubgeschwindigkeit v erzeugt werden, welche mittels weiterer, zu Fig. 2 näher erläuterten Komponenten auf die Antriebswelle 12 übertragen werden. In der schematisierten Darstellung der Fig. 1 ist der erste Elektromotor 20 seitlich am Führungselement 10 befestigt.

Die Vorrichtung 2 umfasst weiterhin einen als Schrauberantrieb ausgebildeten Drehantrieb 22, welcher die Antriebswelle 12 in Drehbewegung um die Drehachse 14 versetzt. Der Drehantrieb 22 weist dabei einen zweiten Elektromotor 24 auf, dessen Abtrieb zur Erzeugung der Drehbewegung mit der Antriebswelle 12 verbunden ist.

Weiterhin umfasst die Vorrichtung eine Steuereinheit 26 zur Steuerung des Direktschraubvorgangs, insbesondere des Fließlochschraubvorgangs. Die Steuereinheit 26 gibt dabei Steuersignale an die beiden Antriebe 16,22 ab.

Beim Fließlochschraubvorgang wird in einem ersten Prozessabschnitt in den Bauteilen 6 ein hier nicht näher dargestelltes Loch geformt. Hierzu wird die Antriebswelle 12 mittels des Drehantriebs 22 mit hoher Drehzahl angetrieben. Gleichzeitig wird mittels des Vorschubantriebs 16 eine hohe Vorschubkraft F ausgeübt. Diese liegt beispielsweise in einem Bereich von oberhalb von 1000N. Die hohe Drehzahl liegt beispielsweise in einem Bereich zwischen 5000U/min bis 8000U/min. Nach Beendigung des Lochformvorgangs wird die Drehzahl in einem zweiten Prozessabschnitt auf eine niedrige Drehzahl umgeschaltet, welche lediglich noch bei 500 bis 2500U/min liegt. Auch wird gleichzeitig eine geringe Vorschubkraft eingestellt, die lediglich noch im Bereich bis 500N liegt. Als Umschaltkriterium wird insbesondere ein charakteristischer mit der Vorschubkraft zumindest korrelierter Wert eines Antriebsparameters des Vorschubantriebs 16 ausgewertet, insbesondere der Motorstrom des ersten Elektromotors 20, wie dies in der am 13.05.2014 eingereichten DE 10 2014 208 989.1 beschrieben ist.

Die Fließlochschraube 4 ist für diesen Prozess speziell ausgebildet. Sie weist einen Schraubenkopf 30, einen daran anschließenden Gewindeschaft mit Gewinde 32 sowie eine endseitige, üblicherweise konische Spitze 34 auf. Die Spitze 34 ist dabei derart ausgebildet, dass bei der Lochformung lediglich ein plastisches Verformen und kein Zerspanungsvorgang erfolgt.

Anhand Fig. 2 wird nunmehr der spezielle bevorzugte Aufbau der Vorrichtung 2 näher dargestellt. Die Vorrichtung 2 umfasst das als zylindrisches Rohr ausgebildete Führungselement 10, welches im Ausführungsbeispiel zweiteilig ausgebildet ist und einen vorderen Führungsabschnitt 10a aufweist, auf dem ein hinterer Antriebsabschnitt 10b als fluchtende Verlängerung angesetzt ist. Innerhalb des rohrförmigen Antriebsabschnitts 10b ist der erste Elektromotor 20 integriert. Der erste Elektromotor 20 weist eine erste Abtriebswelle 20a auf, über die eine Gewindespindel 40 in eine Drehbewegung versetzt wird. Die Gewindespindel ist innerhalb einer Spindelmutter 42 geführt. Die Spindelmutter 42 ist gegen eine Drehbewegung gesichert. Im Ausführungsbeispiel ist hierzu ein Zylinderstift 44 vorgesehen, welcher durch einen sich in Axialrichtung 18 erstreckenden Längsschlitz 46 innerhalb des als Führungsrohr ausgebildeten Führungselements 10 längsverschieblich geführt ist. An einem vorderen Stirnende der Spindelmutter 42 wirkt diese mit einem rückwärtigen Ende der Antriebswelle 12 zusammen, um die Vorschubkraft F sowie die Vorschubgeschwindigkeit v auf die Antriebswelle 12 zu übertragen. Wie aus der Figur 2 zu entnehmen ist, ist die Gewindespindel 40 an ihrem rückwärtigen, gewindefreien Zylinderende über ein erstes Lager 48 gelagert. Dieses ist vorzugsweise als Wälzlager ausgebildet. Im Ausführungsbeispiel ist es als eine Kombination aus einem Axiallager und einem Radiallager ausgebildet.

Die Antriebswelle 12 erstreckt sich in Axialrichtung 18 innerhalb des Führungselements 10, insbesondere innerhalb des Führungsabschnitts 10a, und tritt mit einem vorderen Wellenabschnitt 12a aus dem Führungselement 10 heraus. Im rückwärtigen Bereich ist die Antriebswelle 12 als eine Hohlwelle ausgebildet, in die die Gewindespindel 40 eintaucht. Die Antriebswelle 12 und die Gewindespindel 40 sind ineinander und relativ zueinander beweglich angeordnet. Zum rückwärtigen Bereich zur Spindelmutter 42 hin ist die Antriebswelle 12 in einem zweiten Lager 50, wiederum vorzugsweise ein Wälzlager drehbar gelagert. Das Lager 50 ist wiederum als eine Kombination aus einem Axiallager und einem Radiallager ausgebildet. Durch das Axiallager ist die Spindelmutter 42 von der Antriebswelle 12 in Drehrichtung entkoppelt. Die Antriebswelle 12 ist daher von dem gesamten Spindelantrieb, gebildet durch die Gewindespindel 40 und die Spindelmutter 42, im Hinblick auf die Drehbewegung der Antriebswelle 12 entkoppelt.

Dieses zweite Lager 50 ist innerhalb einer Koppelhülse 52 integriert, welche drehfest mit der Spindelmutter 42 verbunden ist und gemeinsam mit dieser in Axialrichtung 18 verschieblich gelagert ist. Über die Koppelhülse 52 ist der Spindelantrieb mit der Antriebswelle 12 zur Übertragung der Vorschubkraft F und der Vorschubgeschwindigkeit gekoppelt. Gleichzeitig ist die Antriebswelle 12 innerhalb der Koppelhülse 52 geführt. Die in der Fig. 2 dargestellte Vorrichtung ist in einer vollständig zurückgezogenen Position dargestellt, bei der also die Antriebswelle 12 sich in einer vollständig eingezogenen Position befindet. Bei einer Vorschubbewegung wird die Gewindespindel 40 vom ersten Elektromotor 20 in Drehbewegung versetzt, so dass die drehfest angeordnete Spindelmutter 42 sich in Axialrichtung 18 verschiebt. Diese Vorschubbewegung wird über die Koppelhülse 52 und das zweite Lager 50 auf die Antriebswelle 12 übertragen, so dass diese in Axialrichtung 18 nach vorne zur Ausübung der Vorschubbewegung verfährt. Die Spindelmutter 42 und damit auch die Antriebswelle 12, sind um einen maximalen Arbeitshub ΔH in Axialrichtung 18 versetzbar. Dieser liegt vorzugsweise im Bereich zwischen 100 und 150 mm. Der als Hohlwelle ausgebildete Abschnitt der Antriebswelle 12 erstreckt sich über eine axiale Führungslänge ΔF, die vorzugsweise zumindest dem maximalen Arbeitshub ΔH entspricht. Dadurch ist gewährleistet, dass über den gesamten Arbeitshub ΔH die Antriebswelle 12 und die Gewindespindel 40 ineinander angeordnet sind.

Für den Antrieb der Antriebswelle 12, um diese also in eine Drehbewegung zu versetzen, ist der zweite Elektromotor 24 vorgesehen. Dieser ist seitlich neben dem Führungselement 10 und zwar im Ausführungsbeispiel im Führungsabschnitt 10a angeordnet. An diesen zweiten Elektromotor 24 schließt sich noch ein Drehmomentsensor 54 an, welcher im Bereich einer zweiten Abtriebswelle 24a des zweiten Elektromotors 24 angeordnet ist und das vom zweiten Elektromotor 24 ausgeübte Drehmoment erfasst. Endseitig der zweiten Abtriebswelle 24a ist ein Abtriebsrad 56 angeordnet, welches durch eine Aussparung des Führungselements 10 in radialer Richtung hindurchgreift und mit einem Getriebeelement, welches im Ausführungsbeispiel als Keilnabe 58 ausgebildet ist, in Verbindung steht. Korrespondierend zu der Keilnabe 58 ist die Antriebswelle 12 außenseitig mit einer Verzahnung, insbesondere einer Keilwellenverzahnung 60 versehen. Über die Keilnabe 58 und die Keilwellenverzahnung 60 wird eine vom zweiten Elektromotor 24 über das Abtriebsrad 56 übertragene Drehbewegung auf die Antriebswelle 12 übertragen. Durch die Keilwellenverzahnung 60 ist diese in Längsrichtung 18 durch die Keilnabe 58 hindurch verschiebbar gelagert. Die Keilnabe 58 ist also in Axialrichtung 18 feststehend angeordnet und innerhalb des Führungselements 10 drehbar über ein drittes Lager 62 gelagert. Dieses weist zwei voneinander axial beabstandete Lagerteile, insbesondere Wälzlagereinheiten, auf. Über das Abtriebsrad 56 wird also die Keilnabe 58 und mit dieser über die Keilwellenverzahnung 60 die Antriebswelle 12 in Drehbewegung um die Rotationsachse 14 versetzt. Diese wird über das Stirnende der Antriebswelle auf das Schraubelement, insbesondere Fließlochschraube 4, übertragen. Hierzu ist endseitig der Antriebswelle 12 eine hier nicht näher dargestellte Halterung angeordnet, die auch zur Übertragung der Drehbewegung und des erforderlichen Drehmoments auf die Fließlochschraube 4 ausgebildet ist.

Über den Drehmomentsensor 54 wird beispielsweise der Drehmomentverlauf beim Anzug der Fließlochschraube 4 überwacht und der Schraubvorgang entsprechend gesteuert.

Zur Vorrichtung 2 zugehörig ist noch die Steuereinheit 26, die in Fig. 2 nicht näher dargestellt ist. Diese ist beispielsweise als separate Einheit außerhalb des Führungselements 10 angeordnet und kommuniziert beispielsweise mit einer übergeordneten Steuereinheit. Die in der Fig. 2 dargestellte Vorrichtung 2 ist über entsprechende Steuer- und Versorgungsleitungen 64 mit dieser Steuereinheit 26 verbunden. Alternativ sind zumindest Teile der Steuereinheit 26 in die beiden Motoren 20,24 integriert. Im Betrieb steuert und überwacht die Steuereinheit 26 den gesamten Prozess des Direktverschraubens. Dieser lässt sich beim Fließlochschrauben durch die folgenden Teilstufen unterteilen:
a) Zustellbewegung
b) Erwärmung
c) Durchdringen
d) Formen eines Durchzugs
e) Gewindeformen
f) Ein- und Durchschrauben der Fließlochschraube 4
g) Anziehen der Fließlochschraube 4

Während der Zustellbewegung erfolgt eine Vorschubbewegung, bis die Fließlochschraube 4 auf das erste Bauteil 6 auftrifft. Die Steuereinheit fährt die Drehbewegung der Antriebswelle bereits auf eine hohe Drehzahl von bis zu 5000U/min hoch und übt über den Vorschubantrieb 16 eine hohe Vorschubkraft von beispielsweise bis zu 3500N auf die Antriebswelle 12 aus. Hierdurch erwärmt sich das Bauteil 6 und wird gleichzeitig plastisch verformt, so dass sich ein Loch ausbildet. Nach dem Durchdringen lässt der vom Bauteil 6 ausgeübte Widerstand schlagartig nach, so dass die Vorschubkraft F vergleichsweise abrupt abfällt. Dies wird von der Steuereinheit 26 erfasst und als Umschaltzeitpunkt ausgewertet. Insbesondere wird hierzu der vom ersten Elektromotor 20 aufgenommene Motorstrom erfasst und ausgewertet. Wird dieses Umschaltkriterium erfasst, so wird auf eine reduzierte Vorschubkraft F im Bereich von beispielsweise bis maximal 500N umgeschalten und zugleich ergeht ein Umschaltsignal an den zweiten Elektromotor 24 zur Reduzierung der Drehzahl auf einen Maximalwert von beispielsweise 500 bis 2500U/min. Zugleich erfolgt eine Begrenzung der Vorschubgeschwindigkeit. Hierzu ist eine Drehzahlbegrenzung für den ersten Elektromotor 20 vorgesehen. Durch diese Maßnahmen ist zuverlässig gewährleistet, dass das Gewinde 32 nicht mit hoher Geschwindigkeit und hoher Vorschubkraft auf das Bauteil 6 auftrifft. Anschließend erfolgt in der Teilstufe e) das Gewindeformen, bevor das eigentliche Durchschrauben und Anziehen der Fließlochschraube 4 erfolgt. Dieser Einschraubvorgang der Fließlochschraube 4 wird über den Drehantrieb 22 beispielsweise drehmomentgesteuert.

Durch den hier beschriebenen Aufbau der Vorrichtung 2 ist diese insgesamt sehr kompakt aufgebaut. Sie weist eine axiale Länge L des Führungselements 10 im Bereich des Führungsabschnitts 10a auf, die lediglich im Bereich von 250 mm bis 350 mm liegt. Gleichzeitig weist sie eine maximale radiale Ausdehnung R zu einer Seite hin auf, welche lediglich im Bereich bis 30mm und vorzugsweise im Bereich bis 25mm liegt (vgl. hierzu insbesondere auch Fig. 3). Diese radiale Ausdehnung R entspricht dabei dem Radius des Führungselements 10. Die an einer Seite angeordneten weiteren Komponenten des Drehantriebs 22 stehen zwar über, entscheidend ist jedoch, dass zu einer Seite hin eine nur geringe Störkontur durch die Vorrichtung 2 mit dem geringen radialen Abstand R ausgebildet ist.

Anstelle der koaxialen Anordnung des ersten Elektromotors 20 gemäß der Fig. 2 besteht auch die Möglichkeit, diesen ähnlich wie den Drehantrieb 22 radial am Führungsabschnitt 10a außerhalb des Führungselements 10 anzuordnen. In einer Aufsicht betrachtet zeigt dann die Vorrichtung 2 eine in etwa durch ein Dreieck eingrenzbare Außenkontur mit den drei typischerweise in etwa kreisrund ausgebildeten Komponenten Führungselement 10, erster Elektromotor 20 sowie zweiter Elektromotor 24. Diese Ausgestaltung ist in Fig. 3 dargestellt. Wie zu erkennen ist, liegen die Mittenachsen der drei Komponenten 10,20,24 auf den Ecken eines Dreiecks.

Die hier beschriebene Vorrichtung 2 ist im Einsatz vorzugsweise an einer Roboterhand eines Industrieroboters angeordnet. Die einzelnen Schraubelemente, insbesondere Fließlochschrauben 4, werden über eine automatische Zuführeinheit wiederkehrend zugeführt, beispielsweise aus einem Magazin oder auch über einen Zuführschlauch. Die Vorrichtung 2 dient insbesondere zum Direktverschrauben von zwei Bauteilen 6 einer Kraftfahrzeug-Karosserie.

**Bezugszeichenliste**

| | | | |
|---|---|---|---|
| 2 | Vorrichtung | 60 | Keilwellenverzahnung |
| 4 | Fließlochschraube | 62 | drittes Lager |
| 6 | Bauteil | 64 | Steuer- und Versorgungsleitung |
| 8 | Klebschicht | | |
| 10 | Führungselement | F | Vorschubkraft |
| 10a | Führungsabschnitt | v | Vorschubgeschwindigkeit |
| 10b | Antriebsabschnitt | ΔH | maximaler Arbeitshub |
| 12 | Antriebswelle | ΔF | axiale Führungslänge |
| 12a | vorderer Wellenabschnitt | L | axiale Länge |
| 14 | Drehachse | R | radiale Ausdehnung |
| 16 | Vorschubantrieb | | |
| 18 | Axialrichtung | | |
| 20 | erster Elektromotor | | |
| 20a | erste Abtriebswelle | | |
| 22 | Drehantrieb | | |
| 24 | zweiter Elektromotor | | |
| 24a | zweite Abtriebswelle | | |
| 26 | Steuereinheit | | |
| 30 | Schraubenkopf | | |
| 32 | Gewinde | | |
| 34 | Spitze | | |
| 40 | Gewindespindel | | |
| 42 | Spindelmutter | | |
| 44 | Zylinderstift | | |
| 46 | Längsschlitz | | |
| 48 | erstes Lager | | |
| 50 | zweites Lager | | |
| 52 | Koppelhülse | | |
| 54 | Drehmomentsensor | | |
| 56 | Abtriebsrad | | |
| 58 | Keilnabe | | |

## Patentansprüche

1. Vorrichtung (2) zum Verbinden von Bauteilen (6), insbesondere mittels Direktverschrauben, speziell Fließlochschrauben, oder auch mittels Reibschweißen , die aufweist
- ein sich in einer Axialrichtung (18) erstreckendes Führungselement (10)
- eine Antriebswelle (12), die von einem Drehantrieb (22) antreibbar ist und die in Axialrichtung (18) versetzbar ist,
- einen Vorschubantrieb (16), der zur Erzeugung einer Vorschubbewegung sowie einer Vorschubkraft (F) von zumindest 500N ausgebildet ist,
- wobei der Vorschubantrieb (16) eine Vorschubeinheit (40,42) umfasst, die zur Übertragung der Vorschubbewegung (V) sowie der Vorschubkraft (F) auf die Antriebswelle (12) ausgebildet ist und hierzu eine in Axialrichtung (18) versetzbare Komponente (42) aufweist,
- eine Steuereinheit (26) zum Ansteuern des Vorschubantriebs (16), wobei die Steuereinheit (26) derart ausgebildet ist, dass im Betrieb in Abhängigkeit eines Prozessparameters von einer ersten Vorschubkraft (F) auf eine zweite Vorschubkraft (F) umgeschaltet wird, wobei
- die Vorschubeinheit (40,42) koaxial zur Antriebswelle (12) innerhalb des Führungselements (10) angeordnet ist, so dass die Vorschubkraft auf die Antriebswelle (12) zentrisch und querkraftfrei und ohne dass Biegemomente auftreten übertragen wird, wobei
- die Vorschubeinheit (40,42) einen Spindelantrieb mit zwei Spindelelementen, nämlich mit einer Spindelmutter (42) und mit einer Gewindespindel (40) aufweist,
- Drehbewegungen des Vorschubantriebs (16) und der Antriebswelle (12) voneinander entkoppelt sind.

2. Vorrichtung (2) nach dem vorhergehenden Anspruch ,
bei der die Gewindespindel (40) in Axialrichtung (18) ortsfest positioniert ist und die Spindelmutter (42) in Axialrichtung (18) verstellbar angeordnet ist und auf die Antriebswelle (12) einwirkt.

3. Vorrichtung (2) nach einem der vorhergehenden Ansprüche ,
bei der eines der Spindelelemente und die Antriebswelle (12) konzentrisch ineinander angeordnet sind.

4. Vorrichtung (2) nach einem der vorhergehenden Ansprüche ,
bei der die Gewindespindel (40) zentral in der Antriebswelle (12) angeordnet ist, die als Hohlwelle ausgebildet ist.

5. Vorrichtung (2) nach einem der vorhergehenden Ansprüche,
bei der das eine Spindelelement (40) und die Antriebswelle (12) über eine axiale Führungslänge (ΔF) ineinander angeordnet sind, die zumindest einem maximalen Arbeitshub (ΔH) entspricht.

6. Vorrichtung (2) nach einem der vorhergehenden Ansprüche,
bei der der Vorschubantrieb (16) einen ersten Elektromotor (20) als Vorschubmotor und/oder der Drehantrieb (22) einen zweiten Elektromotor (24) aufweist.

7. Vorrichtung (2) nach dem vorhergehenden Anspruch,
bei der die Steuereinheit (16) derart ausgebildet ist, dass sie in Abhängigkeit eines zur Vorschubkraft (F) zumindest korrelierten Parameters, insbesondere eines Motorstroms des ersten Elektromotors (20), von der ersten Vorschubkraft (F) auf eine geringere Vorschubkraft (F) oder auf eine höhere Vorschubkraft (F) umschaltet.

8. Vorrichtung (2) nach einem der vorhergehenden Ansprüche,
bei der die Antriebswelle (12) nach Art einer Keilwelle ausgebildet ist und über ein in Axialrichtung feststehendes Abtriebsrad (56) antreibbar ist, durch das die Antriebswelle (12) in Axialrichtung (18) versetzbar ist.

9. Vorrichtung (2) nach dem vorhergehenden Anspruch,
bei der das Abtriebsrad (56) in Axialrichtung (18) an einem vorderen Ende des Führungselements (10) angeordnet ist.

10. Vorrichtung (2) nach einem der vorhergehenden Ansprüche,
bei der das Führungselement (10) - ohne Berücksichtigung einer eventuellen koaxialen Anordnung eines Antriebsmotors (20) - eine axiale Länge (L) im Bereich von 250mm bis 350mm aufweist.

11. Vorrichtung (2) nach einem der vorhergehenden Ansprüche,
die sich entlang einer Drehachse (14) erstreckt und zu einer Seite eine radiale Ausdehnung (R) von maximal 35mm, vorzugsweise von maximal 30 mm aufweist.

12. Vorrichtung (2) nach einem der vorhergehenden Ansprüche,
bei der die Steuereinheit (16)
- insbesondere für das Fließlochschrauben derart ausgebildet ist, dass in Abhängigkeit des Prozessparameters von einer hohen Vorschubkraft (F) im Bereich größer 1000N auf eine reduzierte Vorschubkraft (F) im Bereich bis 500N und gleichzeitig von einer hohen Drehgeschwindigkeit der Antriebswelle (12) im Bereich von 5000 bis 8000 U/min auf eine geringe Drehgeschwindigkeit im Bereich von 500 bis 2500 U/min umgeschaltet wird oder
- insbesondere für das Reibschweißen derart ausgebildet ist, dass in Abhängigkeit des Prozessparameters von einer geringen Vorschubkraft (F) auf eine höhere Vorschubkraft (F) und von einer hohen Drehgeschwindigkeit auf eine geringe Drehgeschwindigkeit insbesondere auf eine Drehgeschwindigkeit von 0 U/min umgeschaltet wird.

13. Verfahren zum Verbinden zweier Bauteile, insbesondere mittels Direktverschrauben, speziell Fließlochschrauben, oder mittels Reibschweißen mit Hilfe der Vorrichtung (2) nach einem der vorhergehenden Ansprüche.

## Claims

1. Device (2) for connecting structural components (6), in particular by means of direct screwing, especially flow hole screwing, or also by means of friction welding, having
- a guide element (10) extending in an axial direction (18),
- a driveshaft (12), which can be driven by a rotary drive (22) and which can be moved in the axial direction (18),
- a feed drive (16), which is designed to generate a feed movement and a feed force (F) of at least 500 N,
- the feed drive (16) comprising a feed unit (40, 42), which is designed to transmit the feed movement (V) and the feed force (F) to the driveshaft (12) and for this purpose has a component (42) movable in the axial direction (18),
- a control unit (26) for controlling the feed drive (16), the control unit (26) being designed in such a way that during operation a switchover is made from a first feed force (F) to a second feed force (F) depending on a process parameter,
- the feed unit (40, 42) being arranged coaxially with the driveshaft (12) within the guide element (10) such that the feed force is transmitted to the driveshaft (12) centrally and without transverse force and without bending moments arising, wherein
- the feed unit (40, 42) has a spindle drive with two spindle elements, specifically with a spindle nut (42) and with a threaded spindle (40),
- rotational movements of the feed drive (16) and of the driveshaft (12) are decoupled from one another.

2. Device (2) according to the preceding claim, in which the threaded spindle (40) is positioned in a stationary manner in the axial direction (18) and the spindle nut (42) is arranged adjustably in the axial direction (18) and acts on the driveshaft (12) .

3. Device (2) according to one of the preceding claims,
in which one of the spindle elements and the driveshaft (12) are arranged concentrically one inside the other.

4. Device (2) according to one of the preceding claims,
in which the threaded spindle (40) is arranged centrally in the driveshaft (12), which is formed as a hollow shaft.

5. Device (2) according to one of the preceding claims,
in which one spindle element (40) and the driveshaft (12) are arranged one inside the other over an axial guide length (ΔF), which corresponds at least to a maximum operating stroke (ΔH).

6. Device (2) according to one of the preceding claims,
in which the feed drive (16) has a first electric motor (20) as feed motor and/or the rotary drive (22) has a second electric motor (24).

7. Device (2) according to the preceding claim,
in which the control unit (16) is formed in such a way that, depending on a parameter correlated at least to the feed force (F), in particular a motor current of the first electric motor (20), a switchover is made from the first feed force (F) to a lower feed force (F) or to a higher feed force (F).

8. Device (2) according to one of the preceding claims,
in which the driveshaft (12) is formed in the manner of a splined shaft and can be driven via an output gear (56), which is stationary in the axial direction and by which the driveshaft (12) is movable in the axial direction (18).

9. Device (2) according to the preceding claim,
in which the output gear (56) is arranged at a front end of the guide element (10) in the axial direction (18).

10. Device (2) according to one of the preceding claims,
in which the guide element (10) - without consideration of a possible coaxial arrangement of a drive motor (20) - has an axial length (L) in the range from 250 mm to 350 mm.

11. Device (2) according to one of the preceding claims,
which extends along an axis of rotation (14) and has a radial extension (R) on one side of at most 35 mm, preferably of at most 30 mm.

12. Device (2) according to one of the preceding claims,
in which the control unit (16)
- is designed in particular for flow hole screwing in such a way that, depending on the process parameter, a switchover is made from a high feed force (F) in the range greater than 1000 N to a reduced feed force (F) in the range up to 500 N and at the same from a high rotational speed of the driveshaft (12) in the range from 5000 to 8000 rpm to a slow rotational speed in the range from 500 to 2500 rpm or
- is designed in particular for friction welding in such a way that, depending on the process parameter, a switchover is made from a low feed force (F) to a higher feed force (F) and from a high rotational speed to a slow rotational speed, in particular to a rotational speed of 0 rpm.

13. Method for connecting two structural components, in particular by means of direct screwing, especially flow hole screwing, or by means of frictional welding with the aid of the device (2) according to one of the preceding claims.

## Revendications

1. Dispositif (2) de liaison de composants (6), en particulier par vissage direct, spécifiquement par fluotaraudage, ou également par soudage par friction, qui présente
- un élément de guidage (10) s'étendant dans la direction axiale (18),
- un arbre d'entraînement (12) qui peut être entraîné par un entraînement en rotation (22) et qui peut être déplacé dans la direction axiale (18),
- un entraînement d'avance (16) qui est réalisé pour générer un mouvement d'avance ainsi qu'une force d'avance (F) d'au moins 500 N,
- l'entraînement d'avance (16) comprenant une unité d'avance (40, 42) qui est réalisée de manière à transmettre le mouvement d'avance (V) ainsi que la force d'avance (F) à l'arbre d'entraînement (12) et qui présente à cet effet un composant (42) déplaçable dans la direction axiale (18),
- une unité de commande (26) pour commander l'entraînement d'avance (16), l'unité de commande (26) étant réalisée de telle sorte que pendant le fonctionnement, elle effectue la commutation, en fonction d'un paramètre de processus, d'une première force d'avance (F) à une deuxième force d'avance (F),
- l'unité d'avance (40, 42) étant disposée coaxialement à l'arbre d'entraînement (12) à l'intérieur de l'élément de guidage (10) de telle sorte que la force d'avance soit transférée à l'arbre d'entraînement (12) centralement et sans force transversale et sans qu'il ne se produise des couples de flexion,
- l'unité d'avance (40, 42) présentant un entraînement à broche avec deux éléments de broche, à savoir un écrou de broche (42) et une broche filetée (40),
- les mouvements de rotation de l'entraînement d'avance (16) et de l'arbre d'entraînement (12) étant désaccouplés les uns des autres.

2. Dispositif (2) selon la revendication précédente, dans lequel la broche filetée (40) est positionnée fixement dans la direction axiale (18) et l'écrou de broche (42) est disposé de manière déplaçable dans la direction axiale (18) et agit sur l'arbre d'entraînement (12).

3. Dispositif (2) selon l'une quelconque des revendications précédentes,
dans lequel l'un des éléments de broche et l'arbre d'entraînement (12) sont disposés concentriquement l'un dans l'autre.

4. Dispositif (2) selon l'une quelconque des revendications précédentes,
dans lequel la broche filetée (40) est disposée centralement dans l'arbre d'entraînement (12) qui est réalisé sous forme d'arbre creux.

5. Dispositif (2) selon l'une quelconque des revendications précédentes,
dans lequel l'un des éléments de broche (40) et l'arbre d'entraînement (12) sont disposés l'un dans l'autre sur une longueur de guidage axiale (ΔF) qui correspond au moins à une course de travail maximale (ΔH).

6. Dispositif (2) selon l'une quelconque des revendications précédentes,
dans lequel l'entraînement d'avance (16) présente un premier moteur électrique (20) en tant que moteur d'avance et/ou l'entraînement en rotation (22) présente un deuxième moteur électrique (24).

7. Dispositif (2) selon la revendication précédente, dans lequel l'unité de commande (16) est réalisée de telle sorte qu'elle effectue la commutation d'une première force d'avance (F) à une force d'avance inférieure (F) ou à une force d'avance supérieure (F) en fonction d'un paramètre au moins corrélé à la force d'avance (F), en particulier d'un courant de moteur du premier moteur électrique (20).

8. Dispositif (2) selon l'une quelconque des revendications précédentes,
dans lequel l'arbre d'entraînement (12) est réalisé à la manière d'un arbre cannelé et peut être entraîné par le biais d'une roue de prise de force (56) fixée dans la direction axiale, par laquelle l'arbre d'entraînement (12) peut être déplacé dans la direction axiale (18).

9. Dispositif (2) selon la revendication précédente, dans lequel la roue de prise de force (56) est disposée dans la direction axiale (18) au niveau d'une extrémité avant de l'élément de guidage (10) .

10. Dispositif (2) selon l'une quelconque des revendications précédentes,
dans lequel l'élément de guidage (10) - sans tenir compte d'un agencement coaxial éventuel d'un moteur d'entraînement (20) - présente une longueur axiale (L) de l'ordre de 250 mm à 350 mm.

11. Dispositif (2) selon l'une quelconque des revendications précédentes, qui s'étend le long d'un axe de rotation (14) et qui présente d'un côté une étendue radiale (R) de 35 mm au maximum, de préférence de 30 mm au maximum.

12. Dispositif (2) selon l'une quelconque des revendications précédentes,
dans lequel l'unité de commande (16)
- est réalisée, en particulier pour le fluotaraudage, de telle sorte qu'elle effectue la commutation d'une force d'avance élevée (F) de l'ordre de plus de 1000 N à une force d'avance réduite (F) allant jusqu'à 500 N et en même temps d'une vitesse de rotation élevée de l'arbre d'entraînement (12) de l'ordre de 5000 à 8000 tr/m à une vitesse de rotation inférieure de l'ordre de 500 à 2500 tr/m en fonction du paramètre de processus, ou
- en particulier pour le soudage par friction, est réalisée de telle sorte qu'elle effectue la commutation d'une force d'avance inférieure (F) à une force d'avance supérieure (F) et d'une vitesse de rotation supérieure à une vitesse de rotation inférieure en particulier à une vitesse de rotation de 0 tr/m en fonction du paramètre de processus.

13. Procédé de liaison de deux composants, en particulier par vissage direct, spécifiquement par fluotaraudage, ou également par soudage par friction, au moyen du dispositif (2) selon l'une quelconque des revendications précédentes.
